# EUROPEAN PATENT APPLICATION

(11) **EP 4 234 955 A1**
(43) Date of publication of application: **30.08.2023**
(21) Application number: 22175739.6
(22) Date of filing: 27.05.2022
(51) Int. Cl.: F16B 5/12, F16B 37/04, F16B 43/00, B60R 21/207, F16B 2/22, F16B 21/08

(54) **A FASTENER**

(30) Priority: 23.02.2022 EP 22158213
(71) Applicant: Illinois Tool Works, Inc., Glenview, Illinois 60025 (US)
(72) Inventor: ELLIS, Richard, Glenview, Illinois 60025 (US); SERRA, Mateu, Glenview, Illinois 60025 (US); MARTIN MARINO, Ivan, Glenview, Illinois 60025 (US)
(74) Representative: HGF

(57) **Abstract**

The present disclosure relates to a fastener (6) for fastening a component to a mounting plate (2) having a mounting hole (5). The fastener (6) has a spacer element (8) and a fastener element (7) having a thread. The spacer element comprises an end wall adapted to be disposed between the fastener element (7) and the mounting plate (2) in use. The spacer element (8) also comprises a tubular protrusion (17) adapted to protrude through the mounting hole (5) in the mounting plate (2) in use. The spacer element (8) also has a through hole (16) extending through the tubular protrusion (17) and the end wall (15).

## Description

### TECHNICAL FIELD

This invention relates to a fastener, in particular a fastener for fastening an airbag component to a mounting plate.

### BACKGROUND

Fasteners, in particular nuts, are used to mount an airbag component to a mounting plate. For example, a gas cylinder of an airbag may be mounted to a part of a vehicle. The gas cylinder has one or more bolts or threaded studs that are passed through a hole in the mounting plate. A nut and washer engage the screw or threaded stud on the opposite side of the mounting plate to fasten the gas cylinder to the mounting plate.

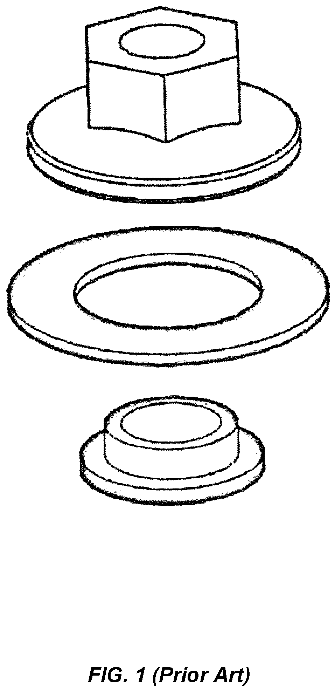

Previous fastener arrangements used for this application have also included a plastic spacer disposed between the gas cylinder and the mounting plate to electrically isolate the gas cylinder from the mounting plate. A problem with such a fastener arrangement and as shown in Figure 1 is that three separate parts are required to be assembled (nut, washer, plastic spacer), in addition to the gas cylinder and mounting plate. Also, it may be difficult to position the plastic spacer on an opposite side of the mounting plate to the nut and washer.

### SUMMARY

In accordance with the present invention there is provided a fastener for fastening a component to a mounting plate having a mounting hole, the fastener comprising a spacer element and a fastener element having a thread, wherein the spacer element comprises:
an end wall adapted to be disposed between the fastener element and the mounting plate in use,
a tubular protrusion adapted to protrude through the mounting hole in the mounting plate in use; and
a through hole extending through the tubular protrusion and the end wall.

Accordingly, a fastener (e.g., a bolt or threaded stud) or a part of the fastener element (e.g., a bolt of the fastener element) can extend through the tubular portion and the mounting hole in the mounting plate.

In examples, the fastener element may be a nut element comprising a threaded hole. In other examples, the fastener element may be a bolt element comprises a threaded bolt. In examples, the fastener element comprises a tool head, for example a female or male socket feature. Accordingly, the fastener may be configured to fasten to a corresponding male or female fastener.

In examples, the tubular protrusion may be configured to attach the fastener to the mounting hole. For example, the tubular protrusion may be a location fit, a transition fit, or an interference fit with the mounting hole. In particular, the tubular protrusion may be a push fit or press fit with the mounting hole. In this way, the fastener can be preassembled with the mounting plate.

In some examples, at least a part of the tubular protrusion may be flared outwardly. For example, an end of the tubular protrusion may be flared outwardly. In examples, all of the end of the tubular protrusion is flared outwardly, or discrete parts of the end of the tubular protrusion are flared outwardly. The flared end of the tubular protrusion may be tapered.

In examples, the tubular protrusion may comprise a sidewall and one or more splits in the sidewall. In examples, there are one, two, three, four or more splits in the sidewall. The splits at least partially divide the tubular protrusion into different sections, each of which may or may not have a flared end. Each section may be deformed or deflected inwards as the tubular protrusion is pushed through the mounting hole.

In examples, the tubular protrusion may be adapted to separate the component from the mounting plate during use. For example, the tubular protrusion may engage the component to space the component from the mounting plate. In examples, the tubular protrusion may be at least partly sandwiched between the mounting plate and the component, thereby acting the separate them.

In examples, the tubular protrusion is adapted to electrically isolate the component from the mounting plate. In particular, the tubular protrusion may comprise an electrically insulative material so that by separating the mounting plate from the component, as described above, they are also electrically isolated. In examples, the spacer element of the fastener is made from an electrically insulating material.

In examples, the spacer element may further comprise a sidewall extending from the end wall and defining a cavity. The fastener element may be received within the cavity. In examples, the fastener element may be slidable within the cavity.

In some examples, the cavity may be sized to permit the fastener element to slide by a distance. The distance may be such that the mounting plate, component and fastener can be arranged in an assembled position before tightening the fastener element. In particular, the distance may correspond to a position of a corresponding fastener (e.g., a threaded stud or nut) that the fastener attaches to.

For example, if the fastener element comprises a nut element then the distance may accommodate a length of the threaded stud or bolt protruding through the mounting hole such that the component, mounting plate and fastener can be brought into the assembled position before the nut element is screwed onto the threaded stud or bolt. In other examples, if the fastener element comprises a threaded bolt, then the distance may correspond to a position of the corresponding nut or threaded hole such that the fastener element can slide within the cavity to allow the component, mounting plate and fastener to be brought into the assembled position before the bolt is screwed into the threaded hole or nut.

Accordingly, the component and mounting plate can be placed in the assembled position without dislodging the fastener. Then, the fastener element can be tightened to complete the assembly. This may be particularly beneficial where there are multiple fasteners for attaching the component to the mounting plate as one fastener can be tightened without dislodging other fasteners.

In examples, the spacer element may comprise one or more retaining elements configured to retain the fastener element within the cavity. For example, the one or more retaining elements may protrude from the sidewall of the spacer element. In examples, a retaining element extends about the entire circumference of the sidewall. In other examples, a plurality of retaining elements are spaced about the circumference of the sidewall.

In examples, the sidewall of the spacer element may comprises at least one split to allow the sidewall to deflect for insertion of the fastener element into the cavity. The at least one split may extend from the end of the sidewall opposite to the end wall. The at least one split may extend from about 10% to about 50% of the length of the sidewall. The at least one split may divide the sidewall into different sections, each of which can be deflected outwards in order to insert the fastener element into the cavity.

In examples, the fastener element comprises a flange, and the cavity is shaped to match the flange. For example, the flange may be circular and the cavity (in particular the sidewall) may have a circular cross-sectional shape. In other examples, the flange and cavity may have a triangular or square cross-sectional or other shape.

In examples, the one or more retaining elements may be tapered. The tapers may help to deflect the sidewall, or sections of the sidewall, outwards as the fastener element passes into the cavity.

In examples, the fastener element comprises a flange. The cavity may be shaped to match the flange. In examples, the cavity and flange may have circular cross-sections such that the fastener element can rotate within the cavity. In other examples, the cavity and flange may have non-circular cross-sections (e.g., triangular, square, hexagonal) such that the fastener element cannot rotate within the cavity.

In accordance with the present invention there is also provided a mounting plate assembly for mounting a component, the mounting plate assembly comprising:
a mounting plate having a mounting hole, and
a fastener as described above received in the mounting hole.

In examples, the tubular protrusion of the spacer element of the fastener may be engaged with the mounting hole to attach the fastener to the mounting plate.

The fastener is pre-assembled with the mounting plate, so that the component can be positioned and fastened at a later time. Advantageously, this reduces the number of parts required to be transported to the assembly site, and greatly simplifies the assembly process.

The mounting plate may have more than one mounting hole, and a plurality of fasteners may be provided. As described above, a cavity of the spacer element may allow the fastener element to slide within the cavity. The cavity may be sized to permit the fastener element to slide by a distance. The distance may be such that the mounting plate, component and fastener can be arranged in an assembled position before tightening the fastener element. In particular, the distance may correspond to a position of a corresponding fastener (e.g., a threaded stud or nut) that the fastener attaches to.

In accordance with the present disclosure there is also provided a fastener for fastening a component to a mounting plate having a mounting hole, the fastener comprising:
a spacer element comprising a sidewall and an end wall that define a cavity, the end wall having a through hole, and
a threaded fastener element received within the cavity of the spacer element and aligned with the through hole,
wherein the cavity comprises one or more retaining members adapted to retain the fastener element in the cavity.

Advantageously, the fastener is therefore one assembly as the fastener element and spacer element are held together. This simplifies the assembly process and reduces the number of parts to stock and transport.

In examples, the fastener element may be a nut element comprising a threaded hole. In other examples, the fastener element may be a bolt element comprises a threaded bolt. In examples, the fastener element comprises a tool head, for example a female or male socket feature.

In examples, the fastener element may be slidable within the cavity. In some examples, the cavity may be sized to permit the fastener element to slide by a distance. The distance may be such that the mounting plate, component and fastener can be arranged in an assembled position before tightening the fastener element. In particular, the distance may correspond to a position of a corresponding fastener (e.g., a threaded stud or nut) that the fastener attaches to.

For example, if the fastener element comprises a nut element then the distance may accommodate a length of the threaded stud or bolt protruding through the mounting hole such that the component, mounting plate and fastener can be brought into the assembled position before the nut element is screwed onto the threaded stud or bolt. In other examples, if the fastener element comprises a threaded bolt, then the distance may correspond to a position of the corresponding nut or threaded hole such that the fastener element can slide within the cavity to allow the component, mounting plate and fastener to be brought into the assembled position before the bolt is screwed into the threaded hole or nut.

Accordingly, the component and mounting plate can be placed in the assembled position without dislodging the fastener. Then, the fastener element can be tightened to complete the assembly. This may be particularly beneficial where there are multiple fasteners for attaching the component to the mounting plate as one fastener can be tightened without dislodging other fasteners.

In examples, the spacer element may comprise one or more retaining elements configured to retain the fastener element within the cavity. For example, the one or more retaining elements may protrude from the sidewall of the spacer element. In examples, a retaining element extends about the entire circumference of the sidewall. In other examples, a plurality of retaining elements are spaced about the circumference of the sidewall.

In examples, the sidewall of the spacer element may comprises at least one split to allow the sidewall to deflect for insertion of the fastener element into the cavity. The at least one split may extend from the end of the sidewall opposite to the end wall. The at least one split may extend from about 10% to about 50% of the length of the sidewall. The at least one split may divide the sidewall into different sections, each of which can be deflected outwards in order to insert the fastener element into the cavity.

In examples, the fastener element comprises a flange, and the cavity is shaped to match the flange. For example, the flange may be circular and the cavity (in particular the sidewall) may have a circular cross-sectional shape. In other examples, the flange and cavity may have a triangular or square cross-sectional or other shape.

In examples, the one or more retaining elements may be tapered. The tapers may help to deflect the sidewall, or sections of the sidewall, outwards as the fastener element passes into the cavity.

In examples, the fastener element comprises a flange. The cavity may be shaped to match the flange. In examples, the cavity and flange may have circular cross-sections such that the fastener element can rotate within the cavity. In other examples, the cavity and flange may have non-circular cross-sections (e.g., triangular, square, hexagonal) such that the fastener element cannot rotate within the cavity.

### BRIEF DESCRIPTION OF THE DRAWINGS

Embodiments of the invention are further described hereinafter with reference to the accompanying drawings, in which:
**Figure 1** shows and illustration of a nut, washer and spacer as known in the art;
**Figure 2** shows (a) a gas cylinder being fastened to a mounting plate with two fasteners and (b) the gas cylinder fastened to the mounting plate;
**Figure 3** show (a) an isometric view and (b) a side view, respectively, of the fastener;
**Figure 4** shows (a) an isometric view, (b) a side view, and (c) a top view, respectively, of a nut element of the fastener;
**Figure 5** shows (a) an isometric view, (b) a side view and (c) a top view, respectively, of a spacer element of the fastener;
**Figure 6** shows (a) cross-sections of the fastener, with the nut positioned over the spacer for assembly, (c) a magnified detail view of the area indicated in (b);
**Figure 7** shows a cross-section of the pre-assembly of the fastener to the mounting plate via the tubular protrusion, with (a) the tubular protrusion positioned over the aperture of the mounting plate, and (b) the tubular protrusion pushed through the aperture of the mounting plate;
**Figure 8** shows a cross-section through the fastener and a stud of the gas cylinder when the gas cylinder is fastened to the mounting plate, and (b) a magnified detail (close-up) view of the tubular protrusion inserted through the aperture of the mounting plate;
**Figure 9** shows the tightening of the fastener using a suitable tool;
**Figure 10** shows a cross-section of the gas cylinder, mounting plate, and two fasteners during assembly;
**Figure 11** shows a cross-section of an alternative example embodiment of the fastener (utilising a bolt instead of a nut) of the present invention attached to the mounting plate;
**Figure 12** shows an isometric view of another alternative example embodiment of the fastener of the present invention including an alternative spacer and the nut (a) with the nut in the upper position and (b) with the nut in the lower position;
**Figure 13** shows the spacer of the fastener of Figure 12 (a) in a perspective view, (b) a front view and (c) a top view;
**Figure 14** shows a cross-sectional view of the fastener of Figure 12 (a) with the nut in the upper position and (b) with the nut in the lower position;
**Figure 15** shows a cross-section of the pre-assembly of the fastener of Figure 12 to the mounting plate via the alternative tubular protrusion, with (a) the alternative tubular protrusion positioned over the aperture of the mounting plate, (b) the tubular protrusion pushed through the aperture of the mounting plate, but with the spacer arms unbent, and (c) a close-up view of the tubular protrusion and bendable spacer arms *in situ;*
**Figure 16** shows the alternative fastener of Figure 12 (a) mounted to the mounting plate with the spacer arms of the tubular protrusion operably bent into spacing arrangement between the mounting plate and the threaded stud of the cylinder, and (b) a close-up view of the bent spacer arms in situ, and
**Figure 17** shows a perspective partial view of the gas cylinder being fastened to a mounting plate with two fasteners via a suitable tool.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

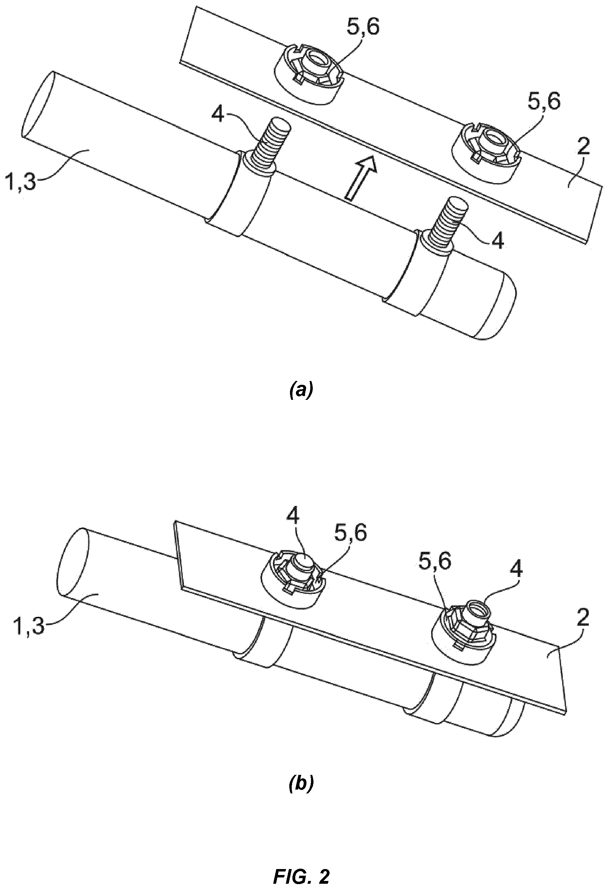

Figures 2 (a) and (b) show a gas cylinder 1 of a vehicle airbag being mounted to a mounting plate 2 of the vehicle. The gas cylinder 1 comprises a cylinder 3 and two threaded studs 4 extending parallelly from the cylinder 3. The threaded studs 4 are received in, and protrude through, mounting holes 5 in the mounting plate 2. Fasteners 6 engage the protruding portion of the threaded studs 4 to fasten the gas cylinder 1 to the mounting plate 2.

As shown in Figures 2 (a) and (b), there are two threaded studs 4 and two corresponding mounting holes 5 and fasteners 6. However, in other examples there may be one threaded stud 4 (with one mounting hole 5 and fastener 6), or three or more threaded studs 4 and a corresponding number of mounting holes 5 and fasteners 6.

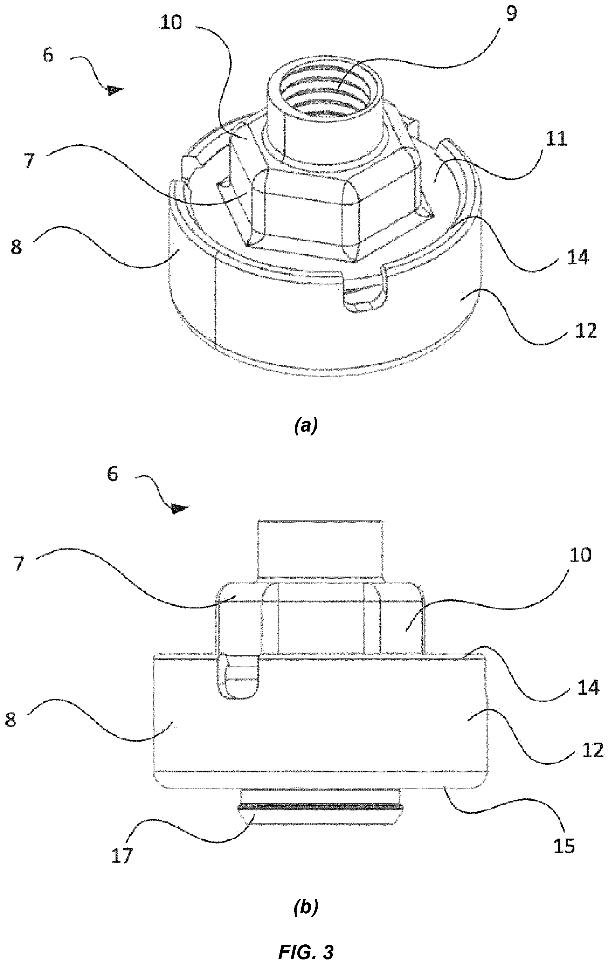

As illustrated in Figures 2(a) to 3(c), the fastener 6 comprises a fastener element, in this example a nut element 7, and a spacer element 8. The spacer element has an end wall 15 and a tubular protrusion 17 extending from the end wall 15. The tubular protrusion 17 is adapted to extend through the mounting hole 5 (see FIG. 2(a)) in the mounting plate 2 (see FIG. 2(a)) during use. A through hole 16 permits a fastener, for example a threaded rod 4 (see FIG. 2(a)) of the gas cylinder 1 (see FIG. 2(a)), to engage the nut element 7.

In particular, the fastener 6 comprises the nut element 7 that is received within a cavity 13 of the spacer element 8. The nut element 7 comprises a threaded hole 9 for connecting to the threaded stud 4 (see FIG. 2(a)) when it protrudes through the mounting hole 5 (see FIG. 2(a)). The nut element 7 also includes a tool head 10, in this example a male hexagonal portion. The tool head 10 is arranged concentrically with the threaded hole 9 and surrounds the threaded hole 9. The tool head 10 is adapted to be engaged by a tool, in particular a socket tool, for rotating the nut element 7 to thread it onto the threaded stud 4 (see FIG. 2(a)). The nut element 7 also includes a flange 11 disposed below the tool head 10 (that is, between the tool head 10 and the end wall 15 of the spacer element 8). The flange 11 is larger than the tool head 10. That is, the flange 11 has a greater diameter than the tool head 10.

The spacer element 8 comprises a generally cylindrical body formed of a sidewall 12 extending from the end wall 15 to define a cavity 13. The nut element 7 is received within the cavity 13. The cavity 13 has an open end 14 opposite to the end wall 15. The end wall 15 of the spacer element 8 has a through hole 16 that is aligned with the threaded hole 9 of the nut element. The cavity 13 is sized so as to receive the flange 11 of the nut element 7 in use. As described further hereinafter, the nut element 7 can slide within the cavity 13 in the direction of the threaded hole 9.

In this example the cavity 13 is generally cylindrical (i.e., the sidewall 12 has a circular cross-sectional shape), and the flange 11 of the nut element 7 is generally circular. The cavity 13 is sized slightly larger than the flange 11 to permit constrained movement of the nut element 7 within the cavity 13, as described further hereinafter. In other examples the cavity 13 and flange 11 may be non-circular, for example they may have a triangular, square or hexagonal cross-sectional shape. Such an arrangement may prevent rotation of the nut element 7 within the cavity 13, which may be beneficial in some applications (e.g., when a bolt is tightened from the other side of the mounting plate 2 (see FIG. 2(a)).

The tubular protrusion 17 extends from the end wall 15 of the spacer element 8, away from the cavity 13. The through hole 16 extends through the tubular protrusion 17. As described further hereinafter, the tubular protrusion 17 is adapted to protrude through the mounting hole 5 (see FIG. 2(a)) in the mounting plate 2 (see FIG. 2(a)). In addition, as described below, the tubular protrusion 17 may be configured to engage the mounting hole 5 to retain the fastener 6 on the mounting plate 2. Additionally or alternatively, the tubular protrusion 17 may be configured to separate the mounting plate 2 and the gas cylinder 1 when assembled, which may electrically isolate the gas cylinder 1 from the mounting plate 2.

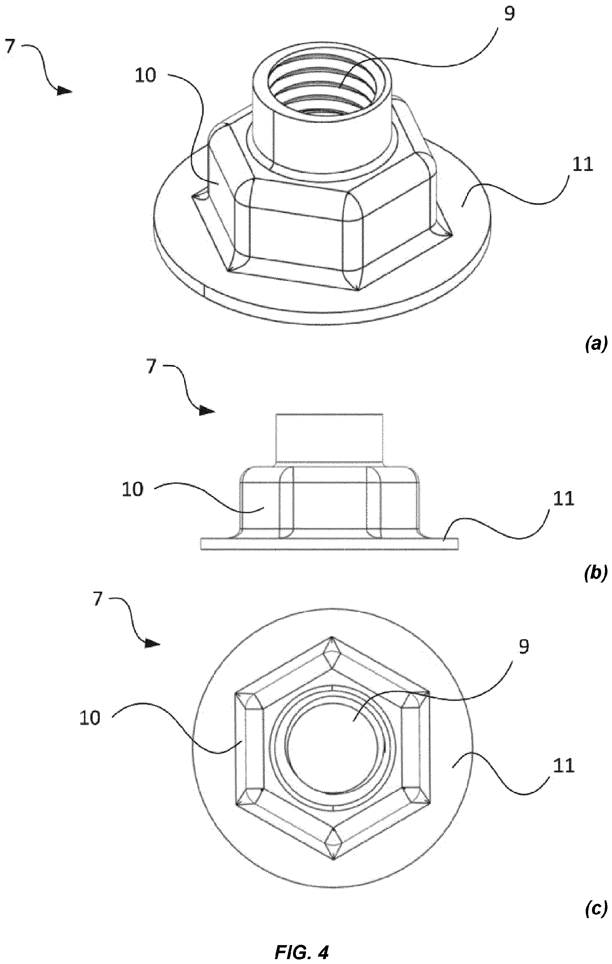

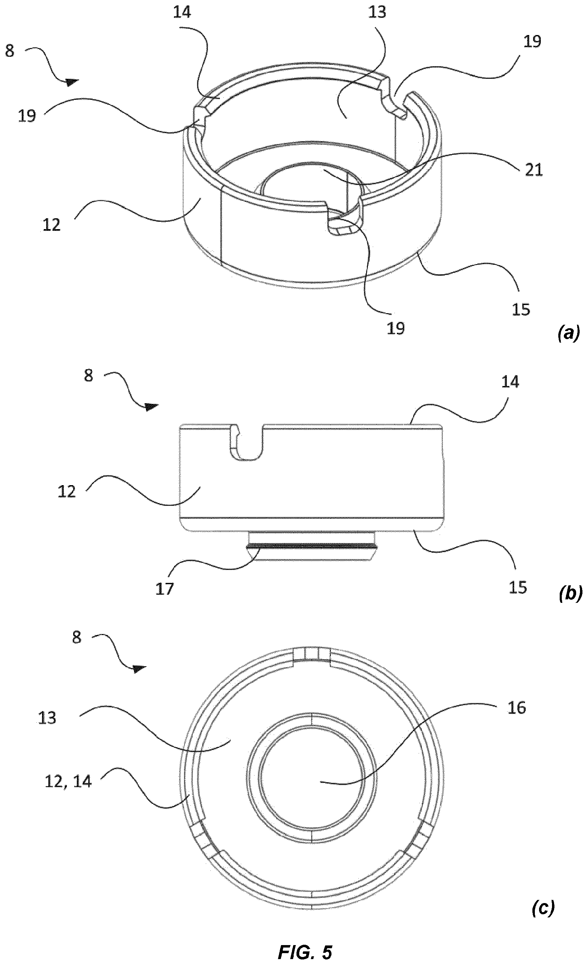

Referring to Figures 4(a) to 6(b), the nut element 7 is received within the cavity 13 of the spacer element 8. As shown in FIG. 5(a), when the fastener 6 is assembled the nut element 7 is pushed into the cavity 13 of the spacer element 8 through the open end 14. As shown most clearly in FIG. 5(b), the open end 14 of the spacer element 8 comprises one or more retaining elements 18. The retaining elements 18 extend radially inwardly from the sidewall 12 at the open end 14. The retaining elements 18 are tapered such that as the nut element 7 is pushed into the cavity 13, the flange 11 of the nut element 7 engages and deflects the retaining elements 18 outwards and the flange 11 can pass by the retaining elements 18. Once the flange 11 has passed the retaining elements 18 and is positioned within the cavity 13, the retaining elements 18 act to retain the nut element 7 within the cavity 13.

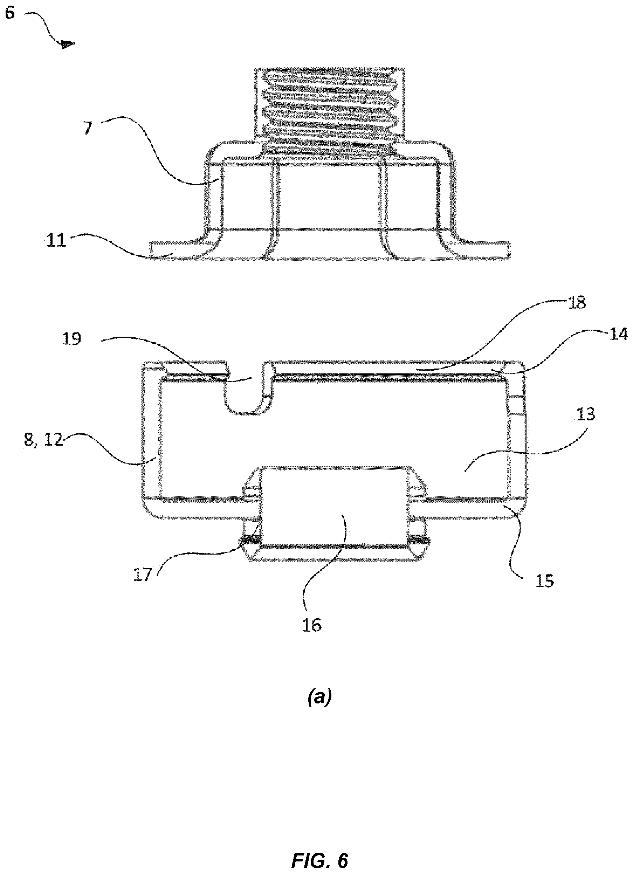

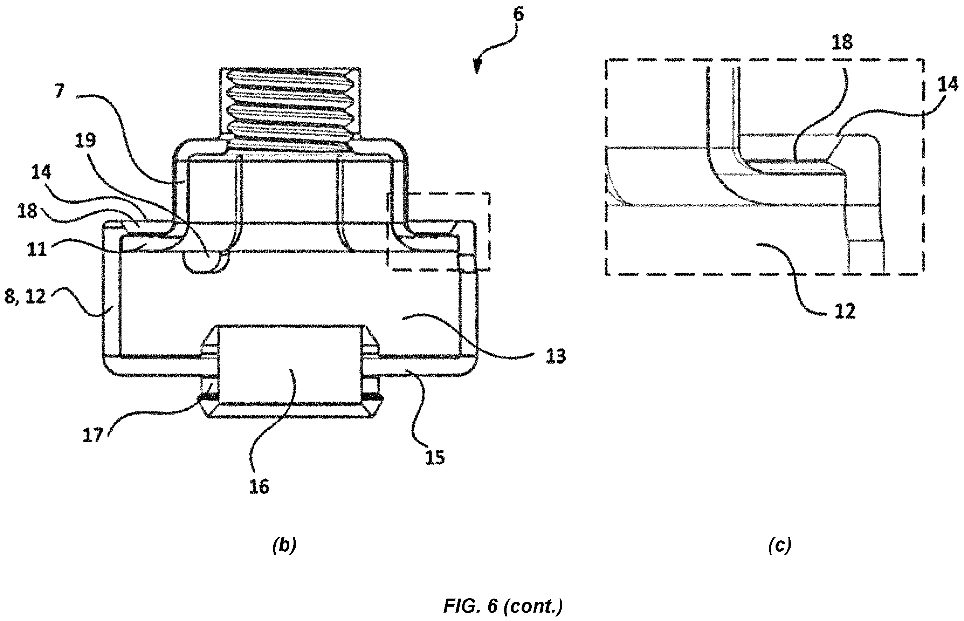

As shown in FIGS. 5(a) and 6(a), the sidewall 12 may comprise one or more splits 19 extending from the open end 14 at least partly towards the end wall 15. The split or splits 19 allow parts of the sidewall 12 to be deflected so that the flange 11 can pass the retaining elements 18 and move into the cavity 13.

In examples there may be one or more retaining elements 18. A single retaining element 18 may extend about the entire circumference of the sidewall 12, without any split 19 as illustrated. In another example, a plurality of retaining elements 19 may be spaced about the circumference of the sidewall 12, and optionally one or more splits 19 may also be provided for deflection. In another example, there are no splits 19 in the sidewall 12 and there are a plurality of retaining elements 18 spaced about the circumference of the sidewall 12.

As shown in FIG. 6(b), the retaining elements 18 are spaced from the end wall 15 of the spacer element 8, so the nut element 7 can slide within the cavity 13. In particular, the nut element 7 can slide between the position shown in FIG. 6(b), where it is in contact with the retaining elements 18, and a lower position in which it is in contact with the end wall 15. This sliding direction is parallel to the direction of the threaded hole 9 in the nut element 7 and the through hole 16 in the spacer element 8. The cavity 13, in particular the sidewall 12, may be sized and shaped to constrain movement of the nut element 7. In particular, the nut element 7 may be constrained to only move in the direction of the threaded hole 9 and through hole 16. As mentioned above, the sidewall 12 and flange 11 may be circular, in which case the nut element 7 can rotate relative to the spacer element 8. In other examples, the sidewall 12 and flange 11 may be non-circular to prevent rotation of the nut element 7 relative to the spacer element 8.

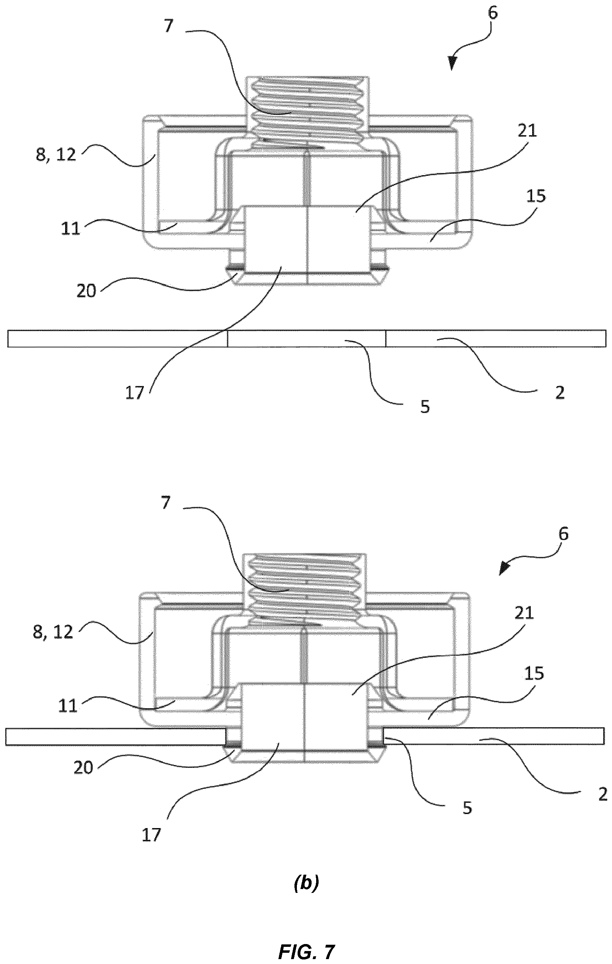

FIGS. 7(a) and 7(b) illustrate pre-assembly of the fastener 6 to the mounting plate 2. In particular, the fastener 6 is attached to the mounting hole 5 in the mounting plate 2. Accordingly, the fastener 6 can be held in place in the mounting hole 5 before the threaded stud 4 (see FIG. 2(a)) of the gas cylinder 1 (see FIG. 2(a)) is present. Advantageously, this greatly simplifies the assembly process as the pre-assembled mounting plate 2 and fastener 6 can be moved into position with the gas cylinder together, as one assembly.

As shown in FIGS. 7(a) and 7(b), the tubular protrusion 17 of the spacer element 8 engages the mounting hole 5 in the mounting plate 2 to retain the fastener 6 on the mounting plate 2. In this way, the fastener 6 is pre-assembled to the mounting plate 2.

In some examples, the tubular protrusion 17 may be a location fit, a transition fit, or an interference fit with the mounting hole 5. In particular, the tubular protrusion 17 may be a push fit or press fit with the mounting hole 5. In this way, the fastener 6 can be fitted onto the mounting hole 5 and will be retained in position.

In the illustrated example, an end 20 of the tubular protrusion 17 is flared outwards. The flared end 20 passes through the mounting hole 5 and abuts against an opposite surface of the mounting plate 2 to retain the fastener 6 in the mounting hole 5. The flared end 20 of the tubular protrusion 17 may be tapered such that the flared end 20 is deflected inwards as it passes through the mounting hole 5.

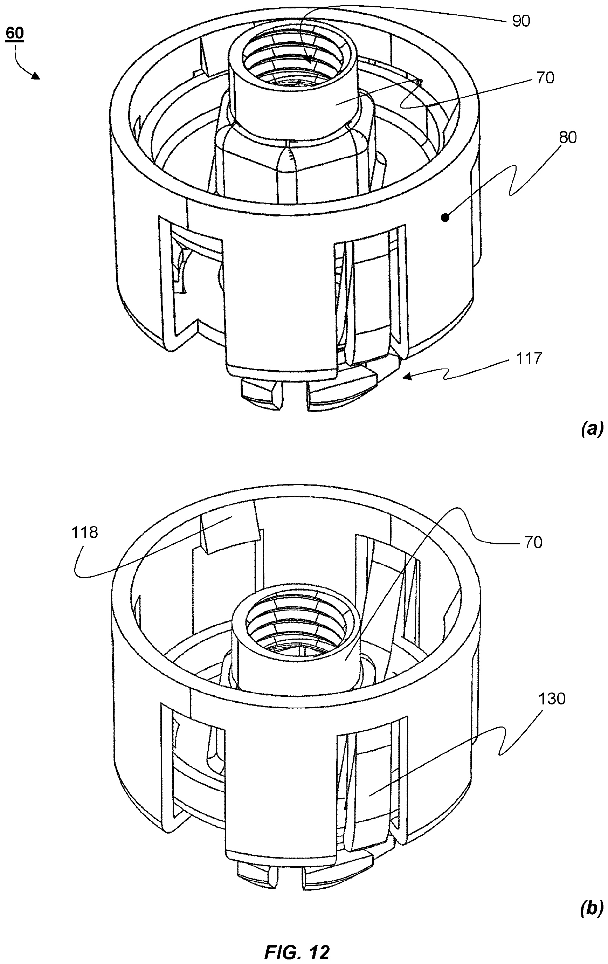

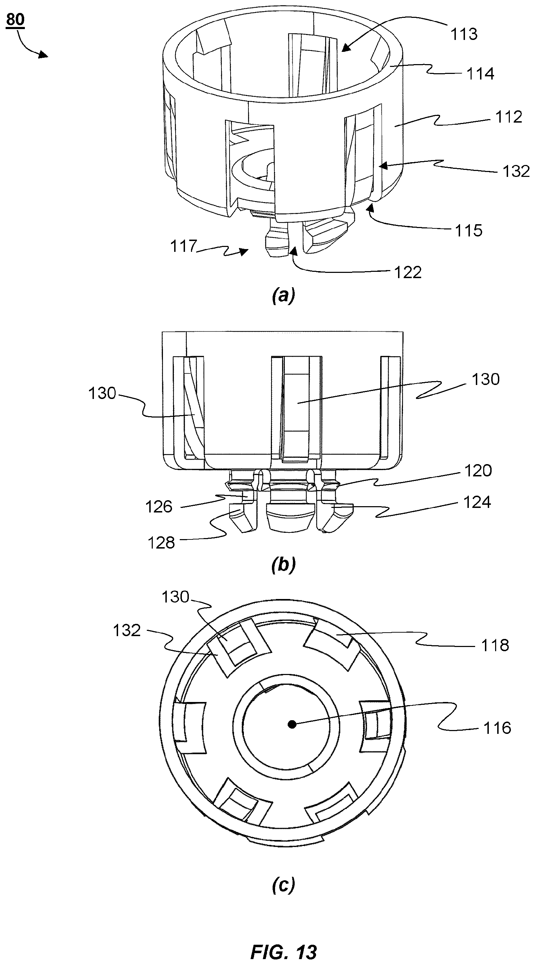

In some examples the tubular protrusion 17 may include one or more splits (see for example alternative embodiment in Figures 12 to 15) that extend from the flared end 20 at least partially towards the end wall 15 of the spacer element 8. Such splits would allow parts of the tubular protrusion 17 to be deflected inwards as the flared end 20 passes through the mounting hole 5.

In some examples, the flared end 20 may be flared about the entire circumference of the tubular protrusion 17, and in other examples the tubular protrusion 17 may comprise one or more flared sections. The flared sections may be separated by splits.

As shown in FIGS. 7(a) and 7(b), to push the fastener 6 into the mounting hole 5 a force can be applied to the nut element 7, for example using a socket tool. The nut element 7 will abut the end wall 15 of the spacer element 8 and thereby transfer force onto the tubular protrusion 17, forcing it through the mounting hole 5. As shown in FIGS. 5(a), 7(a) and 7(b), a spigot 21 may extend from the end wall 15 towards the nut element 7. The spigot 21 may act to centralise and straighten the nut element 7 to align with the through hole 16. In this way, the fastener 6 can be pre-assembled in the mounting hole 5 of the mounting plate 2.

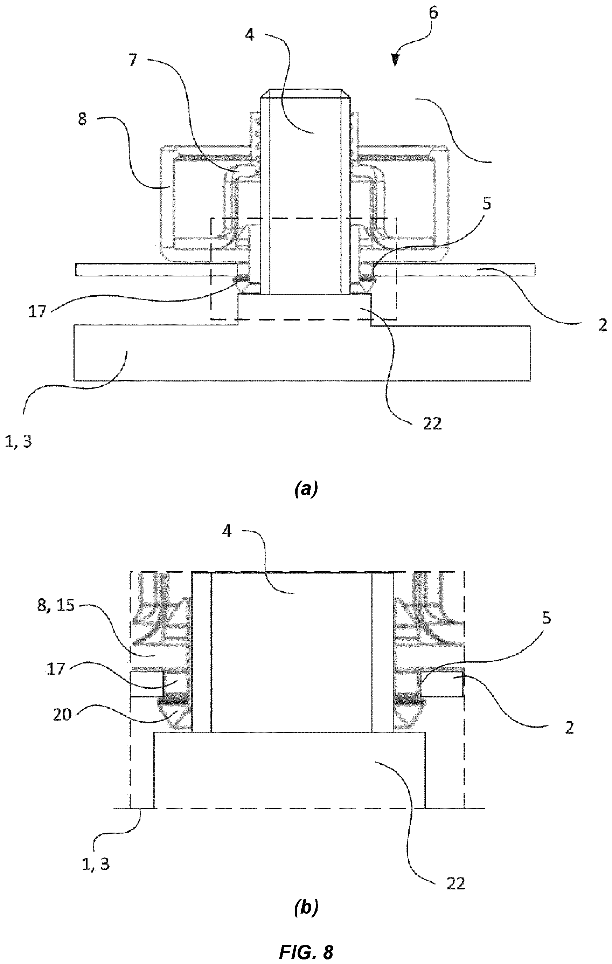

FIGS. 8(a) and 8(b) show cross-sections of the fastener 6, mounting plate 2 and threaded stud 4 in the assembled position (i.e., once the gas cylinder 1 has been mounted to the mounting plate 2 by the fastener 6). As shown, the threaded stud 4 extends from the gas cylinder 1, through the mounting hole 5 in the mounting plate 2 and through the through hole 16 in the spacer element 8 of the fastener 6, and is engaged by the threaded hole 9 of the nut element 7. The nut element 7 has been tightened to clamp the mounting plate 2 to the threaded stud 4.

As illustrated, particularly in the magnified view of FIG. 8(b), the tubular protrusion 17 protrudes through the mounting hole 5 to an opposite side of the mounting plate 2 to the nut element 7. The tubular protrusion 17 acts to separate the mounting plate 2 from the gas cylinder 1. In particular, the threaded stud 4 includes an abutment surface 22 arranged to engage the tubular protrusion 17 so that the tubular protrusion 17 is located between the mounting plate 2 and the threaded stud 4 and gas cylinder 1. Moreover, the tubular protrusion 17 is disposed between the threaded stud 4 and the mounting hole 5. In this way, there is no direct contact between the gas cylinder 1 or threaded stud 4 and the mounting plate 2. The spacer element 8 of the fastener 6, including the tubular protrusion 17, is made from an electrically insulative material, for example plastic or rubber, and so this arrangement acts to electrically isolate the mounting plate 2 from the gas cylinder 1.

In alternative examples the tubular protrusion 17 may abut the gas cylinder 3 itself, rather than the abutment surface 22 shown in FIGS. 8(a) and 8(b).

In examples where the tubular protrusion 17 has a flared end 20 (see FIG. 7(a) and 7(b)), the flared end 20 of the tubular protrusion 17 is sandwiched between the mounting plate 2 and the gas cylinder 1 as shown in FIG. 8(b), thereby acting to separate them. In other examples, for example when the tubular protrusion 17 does not have a flared end, the tubular protrusion 17 may be at least partially deformed or deflected on tightening the nut element 7 so that the tubular protrusion 17 is located between the mounting plate 2 and the gas cylinder 1. Alternatively, the tubular protrusion 17 may not deform or deflect, but act as a spacer and the fit of the tubular protrusion 17 in the mounting hole 5 acts to hold the mounting plate 2 away from the gas cylinder 1.

Advantageously, the tubular protrusion 17 therefore provides for pre-assembly of the fastener 6 in the mounting hole 5 of the mounting plate 2, and separation of the mounting plate 2 and the gas cylinder 1 for electrical isolation. In addition, the fastener 6 is a single pre-assembled component that can be fitted from only one side of the mounting plate 2. The fastener 6 described herein therefore has numerous advantages for manufacturing and cost reduction.

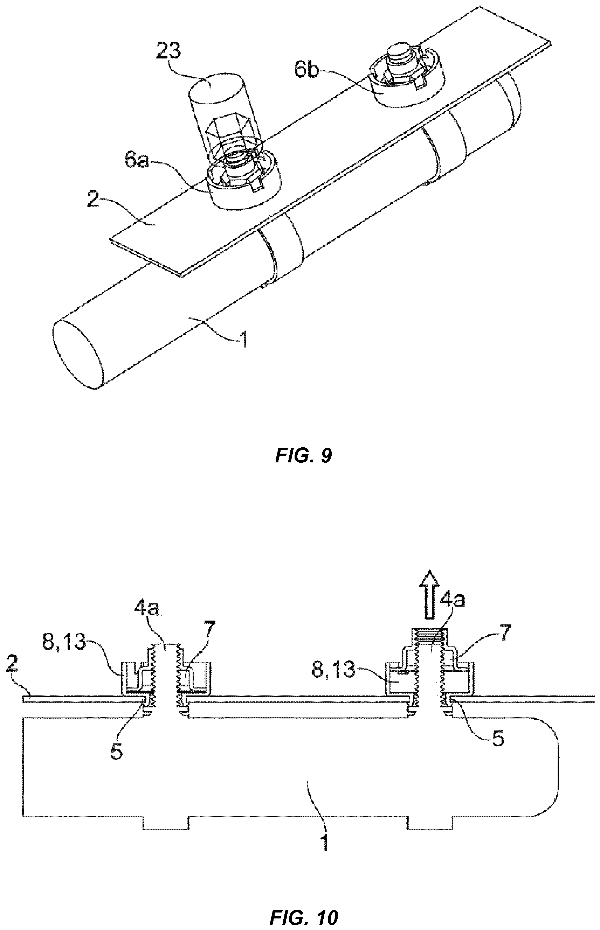

FIGS. 9 and 10 illustrate the assembly of the gas cylinder 1 to the mounting plate 2 using first and second fasteners 6a, 6b. As shown in FIG. 8, a tool 23, in particular a socket tool 23, engages the nut element 7 of each fastener 6a, 6b to screw the nut element 7 onto the threaded stud 4 of the gas cylinder 1.

As shown in FIG. 10, as the first fastener 6a is tightened onto the first threaded stud 4a, the second threaded stud 4b is positioned through the other mounting hole 5 and engages the second fastener 6b. As shown, the nut element 7 of the second fastener 6b is pushed upwards, away from the mounting plate 2, by the second threaded stud 4b. In particular, the nut element 7 slides within the cavity 13, towards the open end 14 of the spacer element 8. Accordingly, the nut element 7 of the first fastener 6a can be tightened onto the first threaded rod 4a without dislodging the spacer element 8 of the second fastener 6b from the mounting hole 5. This happens because the nut element 7 of the second fastener 6b can slide away from the mounting plate 2 within the cavity 13. In examples, the nut element 7 can slide within the cavity 13 by at least a distance corresponding to the protrusion of the threaded stud 4 into the fastener 6. Accordingly, the first fastener 6a can be completely tightened without dislodging the second fastener 6b. After the first fastener 6a has been tightened the second fastener 6b can also be tightened.

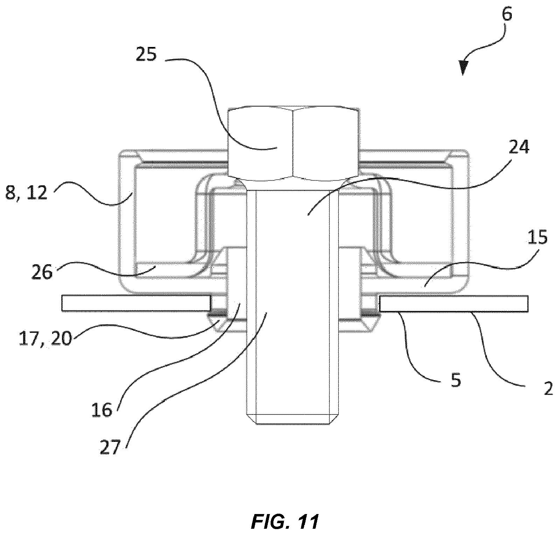

FIG. 11 illustrates an alternative example in which the fastener element comprises a bolt element 24, instead of a nut element 7 as described in the above examples. In the example of FIG. 10, as shown, the bolt element 24 comprises a tool head 25, a flange 26 and a threaded bolt 27. The flange 26 and tool head 25 are similar to as described with reference to the earlier examples, and are received with the cavity 13 of the spacer element 8 as previously described. In this example, the threaded bolt 27 extends through the through hole 16 and tubular protrusion 17. As shown, when assembled with the mounting plate 2 the threaded bolt 27 also extends through the mounting hole 5 and to an opposite side of the mounting plate 2. The threaded bolt 27 may engage a nut or threaded hole on the component to be mounted (e.g., gas cylinder 1, see FIG. 1A). Similarly to earlier examples, the both element 24 can slide within the cavity 13, so that multiple fasteners 6 with bolt elements 24 can be used in the same way as described with reference to FIGS. 9 and 10.

In various examples the fastener element 7, 24 is preferably made from a metal, such as stainless steel. However, in some examples the fastener element 7, 24 may be made from plastic. In various examples the spacer portion 8 is preferably made from plastic, allowing it to be moulded with the necessary features and to provide electrical isolation as described above. However, in some examples the spacer portion 8 may be made from a metal, for example stainless steel.

Referring now to Figures 12 to 17, another alternative embodiment of the fastener assembly of the present invention is shown. Here the fastener 60 is substantially the same as the spacer 6 with various variations in the spacer element 80. The nut element 70 and application are the same as in the previous embodiment and will not be described in any detail. Also, features of the spacer 80 that are identical to the spacer 8 are not described again.

The alternative embodiment of the spacer 80 comprises a generally cylindrical body formed of a sidewall 112 extending from the end wall 115 to define a cavity 113. The nut element 7 is received within the cavity 13. The cavity 113 has an open end 114 opposite to the end wall 115. The end wall 115 of the spacer element 80 has a through hole 116 that is aligned with the threaded hole 90 of the nut element 70. The cavity 113 is sized so as to receive the flange 111 of the nut element 70 in use. As described further hereinafter, the nut element 70 can slide within the cavity 113 in the direction of the threaded hole 90.

In this example the cavity 113 is generally cylindrical (i.e., the sidewall 12 has a circular cross-sectional shape), and the flange 111 of the nut element 70 is generally circular. The cavity 113 is sized slightly larger than the flange 111 to permit constrained movement of the nut element 70 within the cavity 113. However, it is understood that the cavity 113 and flange 111 may be non-circular, for example they may have a triangular, square or hexagonal cross-sectional shape.

The tubular protrusion 117 extends from the end wall 115 of the spacer element 80, away from the cavity 113. The through hole 116 extends through the tubular protrusion 117.

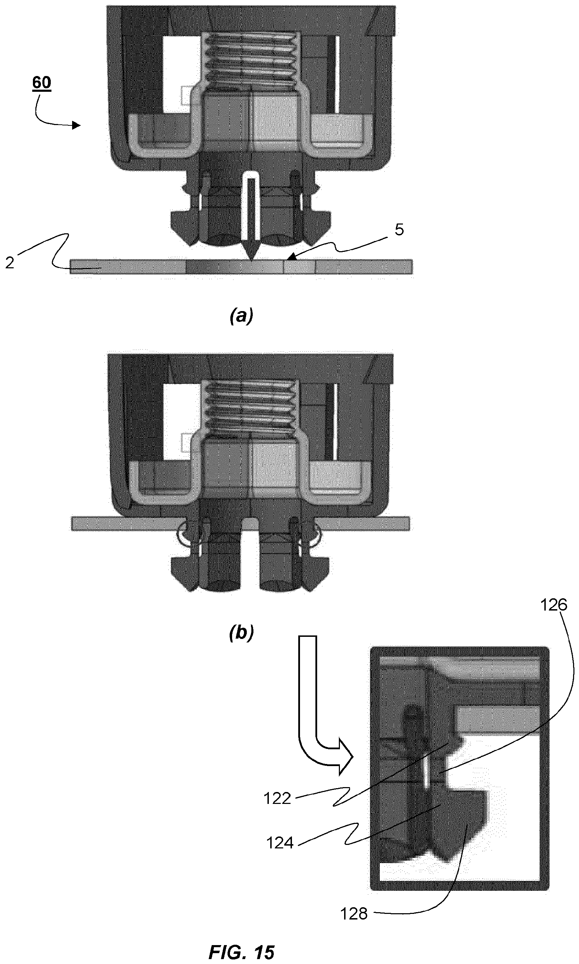

In particular, the tubular protrusion 117 comprises the flared end 120 of the previous embodiment adapted to sandwich between the mounting plate 2 and the gas cylinder 1 when mounted (see Figure 15), thereby acting to separate them. Furthermore, the flared end 120 comprises a plurality of splits 122 so as to allow deflection of the flared end 120 when pushed through the hole or aperture 5 of the mounting plate 2. The splits 122 divides the flared end into a predetermined number of flared end members 120a, 120b, 120c etc. In this particular example, there are six flared end members 120a-f equidistantly spaced apart by respective splits 122a-f. However, it is understood by the person skilled in the art that the flared end may comprise any suitable number of splits 122 and flared end members 120a-n. In addition, a spacer arms 124 extends from one or more of the flared end members 120a-f. Each one of the at least one spacer arm 124 comprises a predetermined bending portion 126 arranged adjacent to the distal end of its respective flared end member 120a-f.

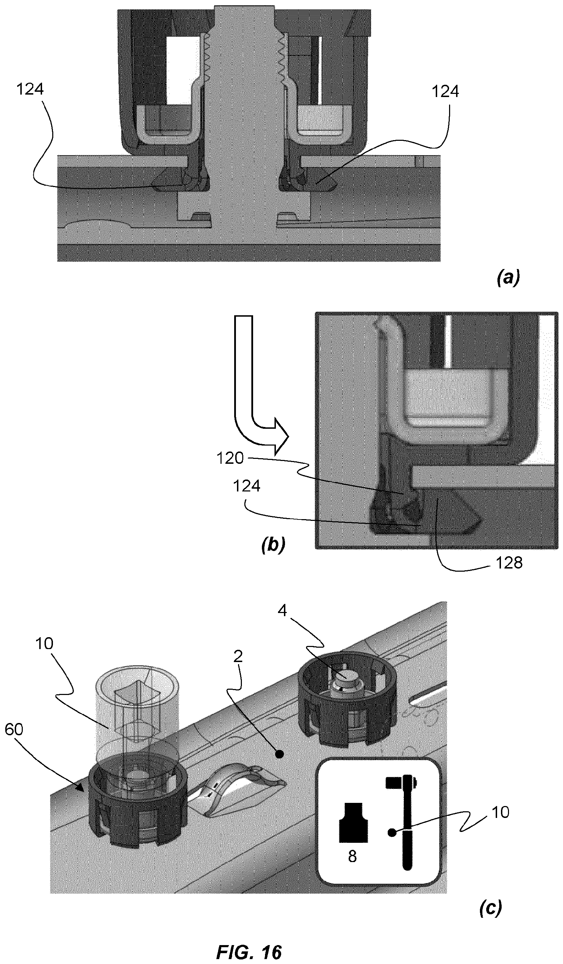

The distal end of the spacer arm 124 comprises a lip 128 protruding radially outwards from the spacer arm. In use, and once the tubular protrusion 117 is pushed through the aperture 5 of the mounting plate 2 and mounted via the flared end members 120a-f, the one or more spacer arms 124 are bent radially outward at the bending portion 126 by the abutment surface 22 of the cylinder 3 / threaded stud 4 when fastened by the nut 70, such that the distal lip 128 provides a spacer between the abutment surface 22 of the cylinder 3 / threaded stud 4 and the mounting plate 2. In particular, and as shown in Figure 16(b), the distal lip 128 of the spacer arm 124 is shaped so as to abuttingly engage with the underside of the mounting plate 2 and the abutment surface 22. The bending portion 126 of the spacer arms 124 may be formed of resilient material (i.e. bending back once the fastener 60 is released) or may be made from a pliable but plastic material. In this particular example embodiment, the tubular protrusion 117 comprises six flared end members 120a-f, wherein four flared end members 120 are provided with extended spacer arms 124, so as to form a semi-circle (i.e. two opposing flared end members are provided with half an extending spacer arm 124). However, it is understood by the person skilled in the art that any number of flared end members 120 may be provided with extending spacer arms 124.

Referring now in particular to Figures 12, 13 and 14, the alternative spacer element 80 further comprises one or more biasing members 130 arranged along the spacer's interior side wall 112 so as to extend from a portion at the open end 114 towards the end wall 115 and progressingly into the cavity 113. The biasing elements 130 are adapted to contactingly engage with the flange 111 of the nut 70 when pushed into the cavity 113 thus providing a more secure fit when in the upper position (pre-assembled) ready for being threaded onto the threaded stud 4 of the cylinder 3, i.e the biasing member(s) 130 are configured to keep the nut 70 at the upper end of the cavity 113 until the nut 70 is forced down to the end wall 115 of the spacer 80 when tightened over the threaded stud 4.

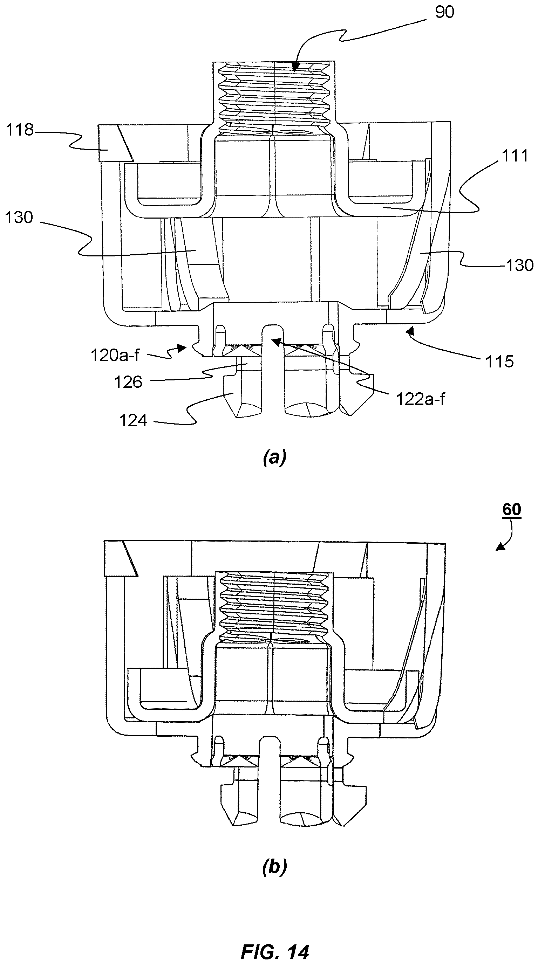

In this particular example embodiment, three equidistantly spaced biasing members 130 are arranged circumferentially around the side wall 112 of the spacer 80. Longitudinally extending apertures 132 are provided in the sidewall 112 with the biasing members 130 provided within respective apertures 132, thus allowing radially outward deflection of the biasing members 130 when engaged with the flange 111 of the nut 70. It is understood by the person skilled in the art that the spacer 80 may be provided with any suitable number of apertures 132 and biasing members 130. In addition, the example embodiment of the spacer 80 comprises retaining elements 118 arranged on an interior surface of the open end 114 and protruding radially inwards. The retaining elements 118 are tapered such that as the nut element 70 can be pushed into the cavity 113 (for example by deflecting the flange portion of the nut 70). Once the nut element 70 is positioned inside the cavity 113 of the spacer 80, the retaining elements 118 provide a stop to the slidable nut element 70 at the open end 114. Therefore, when in the preassembled arrangement (i.e. not threaded to the cylinder studs) the nut 70 is held at the open end 114 (e.g. in contact engagement with retaining members 118) by the biasing members 130 (see Figure 14(a)). The example embodiment of the spacer 80 has three equidistantly spaced retaining members 118 each one arranged between two biasing members 130. During use (e.g. preassembly), when pushing the nut 70 into the cavity 113 passed the retaining members 118, the contact engagement between the flange 111 of the nut 70 and respective retaining member may provide an audible sound (i.e. a click sound) which may also be perceived tactually by the user, thus providing positive feedback when assembling the nut 70 into the cavity 113.

Figures 16 and 17 illustrate a sequence of coupling the preassembled fastener 60 to the mounting plate 2 (via the flared end 120) and fastening the nut 70 to the threaded stud 4 of the cylinder 3 bending the spacer arms 124 into a spacing arrangement between the mounting plate 2 and the abutment surface 22 of the threaded stud 4, thus, isolating the cylinder 3 from the mounting plate 2. Once the fasteners 60 are pushed onto the threaded stud 4, a tool 10 is used to tighten the nuts onto the threaded studs 4

In the example described herein the fastener 6, 60 is used to secure a gas cylinder 1 to a mounting plate 2. However, it will be appreciated that the fastener 6, 60 may be used to fasten various components to a mounting plate 2. For example, the fastener 6, 60 may be used to fasten other parts of an airbag to a mounting plate, or other components of an automobile. In particular, the fastener 6, 60 may be used to fasten electronic components, modules or assemblies to a mounting plate, such as an electronic control unit (ECU), a sensor, or a battery or battery housing. In examples, the fastener 6 may be used with a bolt to secure a component to the mounting plate 2, rather than the threaded studs 4 of the gas cylinder 1 as described above.

In examples, the mounting plate 2 may be a part of a frame or chassis of a vehicle, for example it may be part of a seat frame. The mounting plate 2 may be a substantially planar or flat member, or a substantially planar or flat part of a larger frame member that may be any size or shape.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

### Reference numbers:

| | | | |
|---|---|---|---|
| 1 | Gas cylinder | 113 | cavity |
| 2 | Mounting plate | 114 | Open end |
| 3 | Cylinder | 115 | End wall |
| 4 | Threaded stud | 116 | Through hole |
| 5 | Mounting hole | 117 | Tubular protrusion |
| 6 | Fastener | 118 | Retaining elements |
| 7 | Nut element | 120 | Flared end |
| 8 | Spacer element | 120a-f | Flared end members |
| 9 | Threaded hole (nut) | 122a-f | splits |
| 10 | Tool head (nut) | 124 | Spacer arm |
| 11 | Flange (nut) | 126 | Bending portion |
| 12 | Side wall (spacer) | 128 | Distal lip |
| 13 | Cavity (spacer) | 130 | Biasing element |
| 14 | Open end (spacer) | 132 | apertures |
| 15 | End wall (spacer) | | |
| 16 | Through hole (spacer) | | |
| 17 | Tubular protrusion (spacer) | | |
| 18 | Retaining elements | | |
| 19 | Splits (spacer) | | |
| 20 | Flared end (spacer) | | |
| 21 | Spigot (spacer) | | |
| 22 | Abutment surface (cylinder) | | |
| 23 | Socket tool | | |
| 24 | Bolt element | | |
| 25 | Tool head | | |
| 26 | Flange | | |
| 27 | Threaded bolt | | |
| 60 | Alternative fastener | | |
| 70 | Nut element | | |
| 80 | Spacer element | | |
| 90 | Threaded through hole (nut) | | |
| 111 | flange | | |
| 112 | sidewall | | |

## Claims

1. A fastener (6, 60) for fastening a component (1) to a mounting plate (2) having a mounting hole (5), the fastener (6, 60) comprising a spacer element (8) and a fastener element (7) having a thread, wherein the spacer element (8) comprises:
an end wall (15, 115) adapted to be disposed between the fastener element (7) and the mounting plate (2) in use,
a tubular protrusion (17, 117) adapted to protrude through the mounting hole (5) in the mounting plate (2) in use; and
a through hole (16, 116) extending through the tubular protrusion (17, 117) and the end wall (15, 115).

2. The fastener of claim 1, wherein the tubular protrusion is configured to attach the fastener to the mounting hole.

3. The fastener of claim 2, wherein at least a part of the tubular protrusion is flared outwardly.

4. The fastener of any preceding claim, wherein the tubular protrusion is adapted to separate and electrically isolate the component from the mounting plate during use.

5. The fastener of claim 4, wherein the tubular protrusion further comprises at least one bendable spacer arm extending from a distal end of said tubular protrusion, adapted to bend radially outward about a dedicated bending portion.

6. The fastener of claim 5, further comprising a lip at a distal end portion of the spacer arm, adapted to space apart the mounting plate and the component by a predetermined distance, during use.

7. The fastener of any preceding claim, wherein the spacer element further comprises a sidewall extending from the end wall and defining a cavity, and wherein the fastener element is slidably received within the cavity.

8. The fastener of claim 7, wherein the cavity is sized to permit the fastener element to slide by a distance, and wherein the distance is such that the mounting plate, component and fastener can be arranged in an assembled position before tightening the fastener element.

9. The fastener of any of claims 7 and 8, wherein the spacer element comprises one or more retaining elements protruding radially inwards from the sidewall of the spacer element, configured to retain the fastener element within the cavity.

10. The fastener of any of claims 7 to 9, further comprising at least one biasing member extending from a proximal end of the sidewall towards said end wall and into said cavity, and which is adapted to bias the fastener element towards the proximal end of the sidewall.

11. The fastener of claim 9 or claim 10, wherein the sidewall of the spacer element comprises at least one split to allow the sidewall to deflect for insertion of the fastener element into the cavity.

12. The fastener of any of claims 9 to 11, wherein the one or more retaining elements are tapered.

13. The fastener of any of claims 7 to 12, wherein the fastener element comprises a flange, and wherein the cavity is shaped to operably match the flange.

14. A mounting plate assembly for mounting a component, the mounting plate assembly comprising:
a mounting plate having a mounting hole, and
a fastener according to any of claims 1 to 13 received in the mounting hole.

15. The mounting plate assembly of claim 14, wherein the tubular protrusion of the spacer element of the fastener is engaged with the mounting hole to attach the fastener to the mounting hole.
